# EUROPEAN PATENT SPECIFICATION

(11) **EP 0 574 085 B1**
(45) Date of publication and mention of the grant of the patent: **18.09.1996**
(21) Application number: 93201609.0
(22) Date of filing: 05.06.1993
(51) Int. Cl.: F16H 57/05

(54) **Transmission unit for motor vehicles with a cooling and/or lubrication device**
Getriebe für Kraftfahrzeuge mit Kühl- und/oder Schmierein- richtung
Transmission pour véhicules à moteur avec refroidissement et/ou lubrification

(30) Priority: 11.06.1992 BE 9200544
(43) Date of publication of application: 15.12.1993
(73) Proprietor: VCST, naamloze vennootschap, B-3800 Sint-Truiden (BE)
(72) Inventor: Adriaenssens, Frank, B-3060 Korbeek-Dijle (Bertem) (BE); Wijnants, Peter, B-3111 Wezemaal (BE)
(74) Representative: Donné, Eddy

(56) References cited:
- US-A- 2 546 211
- US-A- 4 781 658
- US-A- 5 033 989
- PATENT ABSTRACTS OF JAPAN vol. 14, no. 33 (M-923)22 January 1990 & JP-A-01 269 760 (MAZDA)
- PATENT ABSTRACTS OF JAPAN vol. 16, no. 253 (M-1263)9 June 1992 & JP-060 251 (NISSAN)-
- PATENT ABSTRACTS OF JAPAN vol. 14, no. 395 (M-1016)27 August 1990 & JP-A-02 150 549 (SUZUKI)
- PATENT ABSTRACTS OF JAPAN vol. 11, no. 377 (M-649)9 December 1987 & JP-A-62 147 168 (DAIHATSU)
- PATENT ABSTRACTS OF JAPAN vol. 10, no. 196 (M-497)10 July 1986 & JP-A-61 041068 ( HONDA)

## Description

The present invention concerns a transmission unit for motor vehicles, in particular a continuously variable transmission which makes use of an endless transmission element, such as a belt.

More particularly the invention relates to a transmission unit of the type comprising a continuously variable transmission composed of two pulleys and an endless transmission element provided therebetween, whereby each pulley consists of two conical pulley halves, one pulley half of each pulley being axially stationary, the other half being axially movable, the axial movement of the movable pulley halves resulting in an axial movement of the transmission element between a first extreme position and a second extreme position; said transmission further comprising stationary liquid supply means for the supply of cooling and/or lubricating liquid on the inner side of the endless transmission element consisting of at least one liquid supply pipe.

A transmission unit of the above-mentioned type, which is provided with a cooling and/or lubrication device, is already known from patent US-A-5.033.989 from which are known the features as defined in the preamble of claim 1 and 5 respectively. The device described herein provides for two fine oil jets which are situated in one and the same radial face and which work in conjunction with the inner side of the endless transmission element. Because, on the one hand, the endless element moves axially and since this is relatively wide, and on the other hand, the oil is only supplied in one radial face, the cooling and/or lubrication is not optimal. A similar device with analogous disadvantages is known from patent JP-A-02150549. Another similar device, but with cooling air, is described in patent JP-A-62147168.

From patent JP-A-04060251, a moveable lubricant supply provided on the outside is known which follows the movement of the endless transmission element. The lubrication is little efficient here, as the oil is deposited on the outside. Moreover, due to the moveability of the lubricant supply, said device is relatively complex.

According to JP-A-01269760, the oil is squirted on the sides of the endless transmission element, which is little efficient. Moreover, a drive is required here, as the spray nozzles have to follow the axial movement of the endless transmission element.

From US 2.546.211 it is known to lubricate a belt or chain by providing liquid supply means extending over a width which equals the width of the belt. The lubrication disclosed in US 2.546.211 is however only efficient for belts or chains which do not carry out a sidewards movement.

The present invention aims a transission unit for motor vehicles, in particular a continuously variable, which is cooled and/or lubricated in an optimal manner.

To this end the invention consists in a transmission unit for motor vehicles, of the above-said type, wherein the liquid supply pipe has at least two flow openings, characterized in that the two flow openings are situated axially next to one another whereby the liquid supply pipe makes sure that within a certain area around the centre of the transmission element whose limits are situated at a distance from the centre which is equal to 25% of the total breadth of the transmission element, for all positions of said transmission element, at least somewhere in this area cooling and/or lubricating liquid is deposited on said transmission element.

The invention also consists in a transmission unit of the above-said type, which is characterized in that said liquid supply pipe has a longitudinal flow opening, said flow opening extending in a direction transverse to the longitudinal direction of the transmission element, such that said flow opening makes sure that within a certain area around the centre of the transmission element whose limits are situated at a distance from the centre which is equal to 25% of the total breadth of the transmission element, for all positions of said transmission element, at least somewhere in this area cooling and/or lubricating liquid is deposited on said transmission element.

In order to better explain the characteristics according to the invention, the following preferred embodiments are described by way of example only and without being limitative in any way with reference to the accompanying drawings, where:
figure 1 is a schematic representation of a transmission unit according to the invention;
figure 2 shows a section to a larger scale according to line II-II in figure 1, whereby the endless transmission element is represented in the two extreme positions;
figure 3 shows a section according to line III-III in figure 1;
figure 4 shows a variant of the liquid supply pipe;
figure 5 shows another transmission unit according to the invention;
figure 6 shows a section according to line VI-VI in figure 5.

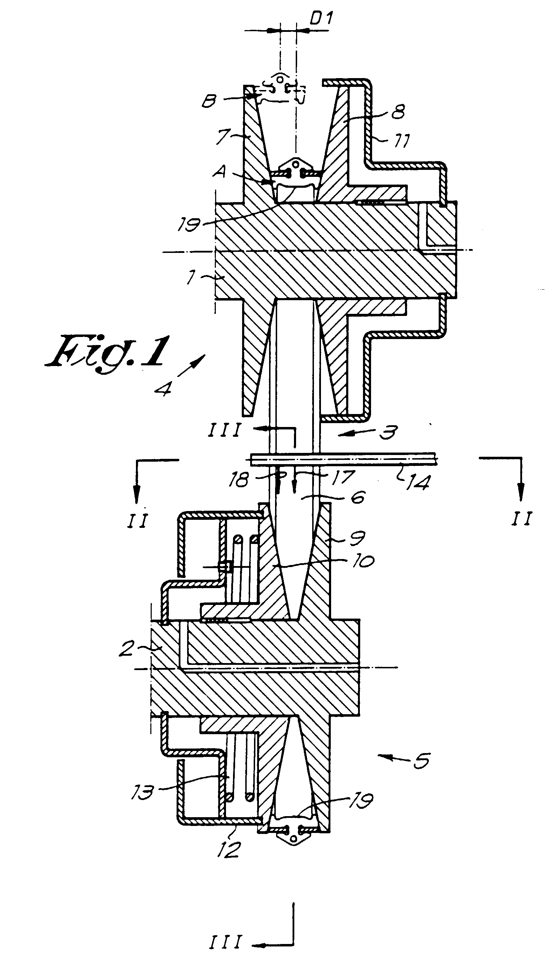

Figure 1 is a schematic representation of a transmission unit, in particular a continuously variable transmission for motor vehicles. As is known, such a transmission unit mainly consists of an ingoing shaft 1, an outgoing shaft 2 and a transmission mechanism 3 in between said shafts.

The transmission mechanism 3 consists of two pulleys 4 and 5 in between which an endless transmission element, such as a belt 6, has been provided.

The pulleys 4 and 5 consist of conical pulley halves 7-8 and 9-10 of which one pulley half 7, 9 respectively, cannot be axially moved and whose second pulley half 8, 10 respectively, can be hydraulically moved in the axial direction. This movement is caused by means of one or several hydraulic cylinders, 11 and 12 respectively, whether or not combined with a spring 13.

As the transmission ratio is changed, the pulley halves 8 and 10 are moved, such that the belt 6 shifts to a bigger or smaller radius. As indicated in figure 1, the belt 6 hereby also shifts in the axial direction, as it constantly makes contact with the axially immobile pulley halves 7 and 9 and as the contact faces of these pulley halves are positioned under a certain angle. The maximum movement is indicated in figure 1 with D1.

The transmission unit according to the invention is provided with liquid supply means which make it possible for cooling and/or lubrication liquid to reach the belt 6 in different spots, spread over the breadth of said belt, on the lower side of the latter, such that the cooling and/or lubrication effect remains optimum, irrespective of the above-mentioned axial movement of the belt 6. These liquid supply means consist of at least one liquid supply pipe 14 and are designed such that they provide for one or several aimed liquid jets.

According to a first embodiment, the transmission unit is provided with a liquid supply pipe 14 which has two or more flow openings.

Preferably, the liquid supply pipe 14, as represented in figure 2, has exactly two flow openings 15 and 16, preferably with a round section.

In order to obtain an optimum cooling and/or lubrication, the flow openings 15 and 16 are preferably situated such and the directions of the outgoing liquid jets 17 and 18 are selected such that in the extreme positions A and B of the belt 6, either of the two liquid jets is at every time aimed at the centre 19 of the belt 6. The liquid jets 17 and 18 are preferably situated in parallel faces which are at right angles with the shafts 1 and 2, such that the distance D2 between the two flow openings 15 and 16 is equal to the above-mentioned distance D1. As represented in figure 2, the centre 19 of the belt 6 is situated near the largest secondary radius before the opening 15, and near the smallest secondary radius before the opening 16. In this manner, cooling and/or lubricating liquid is always squirted in the centre 19 or in the vicinity of the centre 19 on the belt 6, as a result of which this liquid spreads evenly over the breadth of the belt 6, such that in all positions an optimum cooling and/or lubrication is provided.

As shown in figure 1, the liquid supply pipe 14 preferably provides at least for the cooling and/or lubrication of the driven pulley 5.

As shown in figure 3, the flow openings 15 and 16 are preferably situated such or made such that the liquid jets 17 and 18 form an angle, such that these liquid jets are aimed to the spots X and Y where the belt 6 clutches at the pulley 5 before the first extreme position A, the second extreme position B respectively.

According to a variant of the invention, the liquid supply pipe 14, as shown in figure 4, can be provided with one longitudinal opening 20, which extends in the breadth of the belt 6, such that the liquid is squirted over a wide range onto the belt 6.

Summarizing, we can say that the invention makes sure that cooling and/or lubricating liquid is always squirted within a certain range around the centre 19 of the belt 6 onto the latter. As shown in figure 2, the limits of this area G preferably do not extend beyond the middle point 19 than at a distance which is equal to 25% of the total breadth of the belt 6. This implies that in the area G, cooling and/or lubricating liquid is always deposited somewhere on the belt 6.

In order to optimally aim the liquid jets from the flow openings 15, 16 or 20, the inner sides 21 are preferably designed such that they form guides for the jets concerned. As shown in figure 2, the wall 22 in which the openings 15 and 16 are provided are made to this aim according to the invention with a thickness D3 of at least 2 mm. The same applies to the wall 23 in the embodiment from figure 4.

It is clear that the invention can also be realized with one or two liquid supply pipes which each have one or several flow openings.

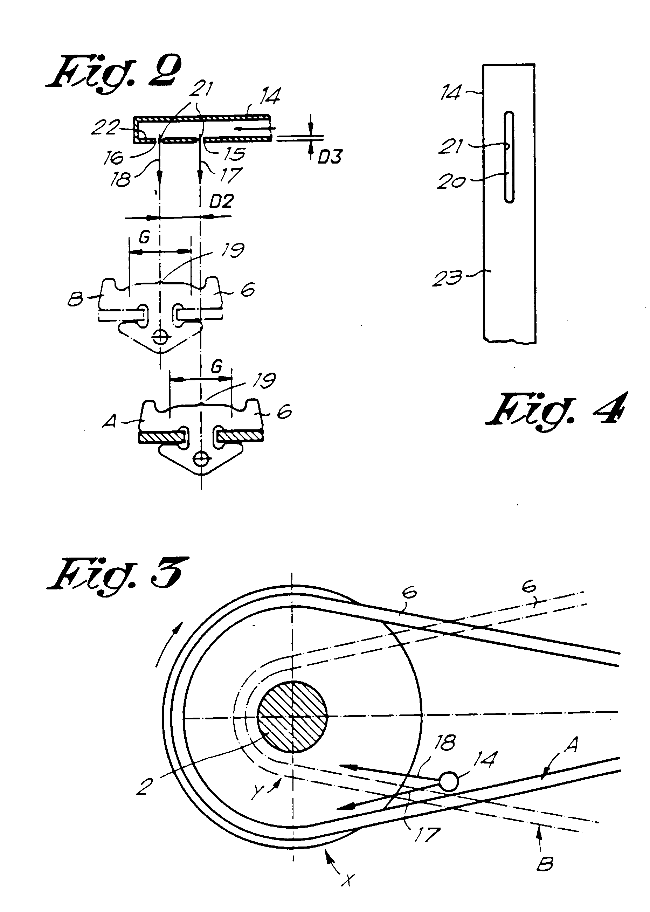

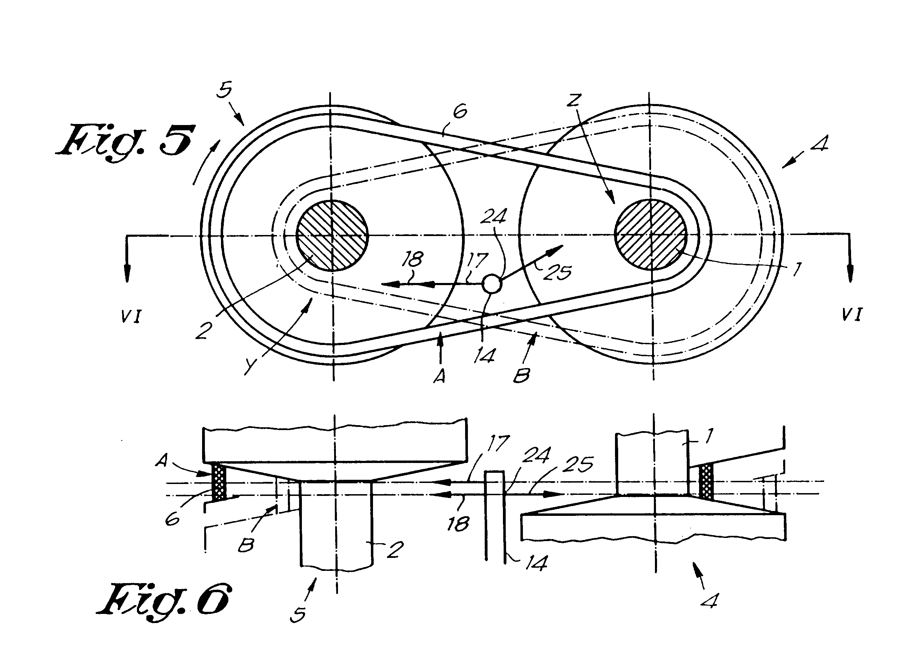

Figures 5 and 6 represent yet another transmission unit according to the invention whereby at the height of the two pulleys 4 and 5 cooling and/or lubricating liquid is supplied to the transmission element of belt 6 by means of at least one liquid supply pipe 14.

As shown in figure 6, the liquid supply pipe 14 hereby has three flow openings, openings 15 and 16 on the one hand for the above-mentioned jets 17 and 18, and an opening 24 on the other hand which provides for a liquid jet 25 in the direction of the primary pulley 4. In the example of figures 5 and 6, both the jets 17 and 18 are aimed at the above-mentioned spot Y where the belt 6 clutches at the pulley 5. The jet 25 is aimed at a spot Z where the belt 6 clutches at the pulley 4, at least for the extreme position A.

It is clear that, analogous to jets 17 and 18, also two jets can be aimed at the primary pulley 4, instead of the jet 25 alone.

A jet of oil or such in the direction of the primary pulley 4 is advantageous in that a better lubrication of said pulley 4 is obtained as well as a better and more evenly lubrication and cooling of the belt 6.

## Claims

1. Transmission unit for motor vehicles, comprising a continuously variable transmission composed of two pulleys (4,5) and an endless transmission element (6) provided therebetween, whereby each pulley (4,5) consists of two conical pulley halves (7-8,9-10), one pulley half (7,9) of each pulley (4,5) being axially stationary, the other half (8,10) being axially movable, the axial movement of the movable pulley halves (8,10) resulting in an axial movement of the transmission element (6) between a first extreme position (A) and a second extreme position (B); said transmission further comprising stationary liquid supply means for the supply of cooling and/or lubricating liquid on the inner side of the endless transmission element (6) consisting of at least one liquid supply pipe (14) with at least two flow openings (15,16), characterized in that the two flow openings (15,16) are situated axially next to one another whereby the liquid supply pipe (14) makes sure that within a certain area (G) around the centre (19) of the transmission element (6) whose limits are situated at a distance from the centre (19) which is equal to 25% of the total breadth of the transmission element (6), for all positions of said transmission element (6), at least somewhere in this area (G) cooling and/or lubricating liquid is deposited on said transmission element (6).

2. Transmission unit according to claim 1, characterized in that the liquid jet (17) of one flow opening (15) is aimed at a location which corresponds to the centre of the transmission element (6) for the first extreme position (A) and that the liquid jet (18) of the other flow opening (16) is aimed at a location which corresponds to the centre of the transmission element (6) for the second extreme position (B).

3. Transmission unit according to one of the claims 1 or 2, characterized in that the flow openings (15,16) are situated and/or made such that the liquid jets (17,18) form an angle.

4. Transmission unit according to claim 3, characterized in that the liquid jets (17,18) are aimed at the spots (X,Y) where the transmission element (6) clutches at the pulley (4,5) in question, for the two extreme positions (A,B) respectively.

5. Transmission unit for motor vehicles, comprising a continuously variable transmission composed of two pulleys (4,5) and an endless transmission element (6) provided therebetween, whereby each pulley (4,5) consists of two conical pulley halves (7-8,9-10), one pulley half (7,9) of each pulley (4,5) being axially stationary, the other half (8,10) being axially movable, the axial movement of the movable pulley halves (8,10) resulting in an axial movement of the transmission element (6) between a first extreme position (A) and a second extreme position (B); said transmission further comprising stationary liquid supply means for the supply of cooling and/or lubricating liquid on the inner side of the endless transmission element (6) consisting of at least one liquid supply pipe (14), characterized in that said liquid supply pipe (14) has a longitudinal flow opening (20), said flow opening (20) extending in a direction transverse to the longitudinal direction of the transmission element (6) such that said flow opening (20) makes sure that within a certain area (G) around the centre (19) of the transmission element (6) whose limits are situated at a distance from the centre (19) which is equal to 25% of the total breadth of the transmission element (6), for all positions of said transmission element (6), at least somewhere in this area (G) cooling and/or lubricating liquid is deposited on said transmission element (6).

6. Transmission unit according to one of the claims 1 to 5, characterized in that said one or at least two flow openings (15,16;20) have inner sides (21) to form guides for the liquid.

7. Transmission unit according to claim 6, characterized in that the wall (22,23) of the liquid supply pipe (14) in which the flow openings (15,16;20) are provided has a thickness of at least two millimetres.

8. Transmission unit according to one of the claims 1 to 7 characterized in that said one liquid supply pipe (14) is provided with a further opening (24) which provides with said other flow openings (15, 16; 20) the supply of both cooling and/or lubricating liquid onto the transmission element (6) at the height of both the pulleys (4,5) by means of several liquid jets (17,18;25).

## Patentansprüche

1. Getriebe für Kraftfahrzeuge, welches eine stufenlos verstellbare Übersetzung umfaßt, die aus zwei Riemenscheiben (4,5) und einem dazwischen vorgesehenen Endlos-Übersetzungselement (6) zusammengestellt ist, wobei jede Riemenscheibe (4,5) aus zwei konischen Riemenscheibenhälften (7-8,9-10) besteht, wobei eine Riemenscheibenhälfte (7,9) jeder Riemenscheibe (4,5) axial stationär ist und die andere Hälfte (8,10) axial bewegbar ist, wobei die axiale Bewegung der bewegbaren Riemenscheibenhälften (8,10) in einer axialen Bewegung des Übersetzungselements (6) zwischen einer ersten Extremposition (A) und einer zweiten Extremposition (B) resultiert; wobei besagte Übersetzung weiterhin stationäre Flüssigkeitszufuhrmittel für die Zufuhr von Kühl- und/oder Schmierflüssigkeit an der Innenseite des Endlos-Übersetzungselements (6) umfaßt, die aus zumindest einem Flüssigkeitszufuhrröhrchen (14) mit zumindest zwei Ausströmöffnungen (15,16) bestehen, dadurch gekennzeichnet, daß die beiden Ausströmöffnungen (15,16) axial nebeneinander angeordnet sind, wobei das Flüssigkeitszufuhrröhrchen (14) sicherstellt, daß, innerhalb eines bestimmten Bereichs (G) um die Mitte (19) des Übersetzungselements (6) herum, dessen Grenzen sich in einem Abstand zur Mitte (19) befinden, der gleich 25% der gesamten Breite des Übersetzungselements (6) ist, für alle Positionen besagten Übersetzungselements (6), zumindest irgendwo in diesem Bereich (G) Kühl- oder Schmierflüssigkeit auf besagtes Übersetzungselement (6) gebracht wird.

2. Getriebe gemäß Anspruch 1, dadurch gekennzeichnet, daß der Flüssigkeitsstrahl (17) einer Ausströmöffnung (15) auf eine Stelle gerichtet ist, die der Mitte des Übersetzungselements (6) für die erste Extremposition (A) entspricht und daß der Flüssigkeitsstrahl (18) der anderen Ausströmöffnung (16) auf eine Stelle gerichtet ist, die der Mitte des Übersetzungselements (6) für die zweite Extremposition (B) entspricht.

3. Getriebe gemäß einem der Ansprüche 1 oder 2, dadurch gekennzeichnet, daß die Ausströmöffnungen (15,16) so angeordnet und/oder gefertigt sind, daß die Flüssigkeitsstrahlen (17,18) einen Winkel bilden.

4. Getriebe gemäß Anspruch 3, dadurch gekennzeichnet, daß die Flüssigkeitsstrahlen (17,18) auf die Punkte (X,Y) gerichtet sind, wo das Übersetzungselement (6) an der fraglichen Riemenscheibe (4,5) greift, jeweils für die zwei Extrempositionen (A,B).

5. Getriebe für Kraftfahrzeuge, welches eine stufenlos verstellbare Übersetzung umfaßt, die aus zwei Riemenscheiben (4,5) und einem dazwischen vorgesehenen Endlos-Übersetzungselement (6) zusammengestellt ist, wobei jede Riemenscheibe (4,5) aus zwei konischen Riemenscheibenhälften (7-8,9-10) besteht, wobei eine Riemenscheibenhälfte (7,9) jeder Riemenscheibe (4,5) axial stationär ist und die andere Hälfte (8,10) axial bewegbar ist, wobei die axiale Bewegung der bewegbaren Riemenscheibenhälften (8,10) in einer axialen Bewegung des Übersetzungselements (6) zwischen einer ersten Extremposition (A) und einer zweiten Extremposition (B) resultiert; wobei besagte Übersetzung weiterhin stationäre Flüssigkeitszufuhrmittel für die Zufuhr von Kühl- und/oder Schmierflüssigkeit an der Innenseite des Endlos-Übersetzungselements (6) umfaßt, die aus zumindest einem Flüssigkeitszufuhrröhrchen (14) bestehen, dadurch gekennzeichnet, daß besagtes Flüssigkeitszufuhrröhrchen (14) eine längliche Ausströmöffnung (20) aufweist, wobei besagte Ausströmöffnung (20) sich in einer Richtung quer zur Längsrichtung des Übersetzungselements (6) erstreckt, so daß besagte Ausströmöffnung (20) sicherstellt, daß, innerhalb eines bestimmten Bereichs (G) um die Mitte (19) des Übersetzungselements (6) herum, dessen Grenzen sich in einem Abstand zur Mitte (19) befinden, der gleich 25% der gesamten Breite des Übersetzungselements (6) ist, für alle Positionen besagten Übersetzungselements (6), zumindest irgendwo in diesem Bereich (6) Kühl- und/oder Schmierflüssigkeit auf besagtes Übersetzungselement (6) gebracht wird.

6. Getriebe gemäß einem der Ansprüche 1 bis 5, dadurch gekennzeichnet, daß besagte ein oder zumindest zwei Ausströmöffnungen (15,16;20) Innenseiten (21) aufweisen, um Führungen für die Flüssigkeit zu bilden.

7. Getriebe gemäß Anspruch 6, dadurch gekennzeichnet, daß die Wand (22,23) des Flüssigkeitszufuhrröhrchens (14), in der die Ausströmöffnungen (15,16;20) vorgesehen sind, eine Dicke von zumindest zwei Millimetern hat.

8. Getriebe gemäß einem der Ansprüche 1 bis 7, dadurch gekennzeichnet, daß besagtes eines Flüssigkeitszufuhrröhrchen (14) mit einer weiteren Öffnung (24) versehen ist, die mit besagten anderen Ausströmöffnungen (15,16;20), mittels mehrerer Flüssigkeitsstrahlen (17,18;25), für die Zufuhr von Kühl- und/oder Schmierflüssigkeit auf das Übersetzungselement (6) in Höhe beider Riemenscheiben (4,5) sorgt.

## Revendications

1. Unité de transmission pour vehicules à moteurs, comprenant une transmission variable en continu composée de deux poulies (4,5) et un élément de transmission sans fin (6) appliqué entre celles-ci, chaque poulie consistant de deux moitiés de poulie coniques (7-8,9-10), une moitié de poulie (7,9) de chaque poulie (4,5) étant axialement stationnaire, l'autre moitié de poulie (8,10) étant axialement mobile, le mouvement axial des moitiés de poulie mobiles (8,10) resultant en un mouvement axial de l'élément de transmission (6) entre une première position extrême (A) et une seconde position extrême (B); ladite transmission comprenant également des moyens stationnaires d'alimentation de liquide pour amener le liquide de refroidissement et/ou de lubrification sur la face inférieure de l'élément de transmission sans fin (6), consistant au moins d'un tuyau d'admission de liquide (14) muni au moins de deux orifices d'écoulement (15,16), caractérisée en ce que les deux orifices d'écoulement (15,16) sont situés axialement l'un par rapport à l'autre, de sorte que le tuyau d'admission de liquide (14) garantit que dans un certain rayon (G) autour du centre 19 de l'élément de transmission (6) dont les limites sont situées à une distance du centre (19) qui est égale à 25% de la largeur totale de l'élément de transmission (6), pour toutes les positions dudit élément de transmission (6), au moins quelque part dans ce rayon (G) du liquide de refroidissement et/ou de lubrification est déposé sur ledit élément de transmission (6).

2. Unité de transmission suivant la revendication 1, caractérisée en ce que le jet de liquide (17) d'un orifice d'écoulement (15) est dirigé à un endroit qui correspond au centre de l'élément de transmission (6) pour la première position extrême (A) et que le jet de liquide (18) de l'autre orifice d'écoulement (16) est dirigé à un endroit qui correspond au centre de l'élément de transmission (6) pour la seconde position extrême (B).

3. Unité de transmission suivant l'une des revendications 1 ou 2, caractérisée en ce que les orifices d'écoulement (15,16) sont situés et/ou formés tels que les jets de liquide (17,18) constituent un angle.

4. Unité de transmission suivant la revendication 3, caractérisée en ce que les jets de liquide (17,18) sont dirigés aux endroits (X,Y) où l'élément de transmission (6) saisit la poulie (4,5) en question, pour les deux positions extrêmes (A,B) respectivement.

5. Unité de transmission pour véhicules à moteur, comprenant une transmission variable en continu composée de deux poulies (4,5) et un élément de transmission sans fin (6) appliqué entre celles-ci, chaque poulie (4,5) consistant de deux moitiés de poulie coniques (7-8,9-10), une moitié de poulie (7,9) de chaque poulie (4,5) étant axialement stationnaire, l'autre moitié de poulie (8,10) étant axialement mobile, le mouvement axial des moitié de poulie mobiles (8,10) resultant en un mouvement axial de l'élément de transmission entre une première position extrême (A) et une seconde position extrême (B); ladite transmission comprenant également des moyens stationnaires d'alimentation de liquide pour refroidir et/ou lubrifier la face inférieure de l'élément de transmission sans fin (6) consistant d'un tuyau d'admission de liquide (14), caractérisée en ce que ledit tuyau d'admission de liquide (14) est muni d'un orifice d'écoulement longitudinal (20), ledit orifice d'écoulement (20) s'étendant dans une direction transversale par rapport à la direction longitudinale de l'élément de transmission (6), de sorte que ledit orifice d'écoulement (20) garantit que dans un certain rayon (G) autour du centre (19) de l'élément de transmission (6) dont les limites sont situées à une distance du centre (19) qui est égale à 25% de la largeur totale de l'élément de transmission (6), pour toutes les positions dudit élément de transmission (6), au moins quelque part dans ce rayon du liquide de refroidissment et/ou de lubrification est déposé sur ledit élément de transmission (6).

6. Unité de transmission suivant une des revendications 1 à 5, caractérisée en ce que ledit un ou au moins deux orifices d'écoulement (15,16;20) ont des faces internes (21) pour former des guides pour le liquide.

7. Unité de transmission suivant la revendication 6, caractérisée en ce que le paroi (22,23) du tuyau d'admission de liquide, (14) dans lequel les orifices d'écoulement (15,16;20) ont été appliqués, a une épaisseur d'au moins deux milimètres.

8. Unité de transmission suivant une des revendication 1 à 7, caractérisée en ce que ledit tuyau d'admission de liquide (14) est muni d'un autre orifice (24) qui pourvoit avec lesdits orifices d'écoulement (15,16;20), parmi plusieurs jets de liquide (17,18;25), dans l'alimentation de liquide pour refroidir et/ou lubrifier l'élément de transmission (6) à la hauteur de chacune des poulies (4,5).
